# FASCICULE DE BREVET EUROPEEN

(11) **EP 1 330 352 B1**
(45) Date de publication et mention de la délivrance du brevet: **15.03.2006**
(21) Numéro de dépôt: 01972225.5
(22) Date de dépôt: 27.09.2001
(51) Int. Cl.: B31F 1/07, D21H 27/40, B32B 29/00

(54) **PROCEDE DE FABRICATION D'UNE FEUILLE DE PAPIER ABSORBANT MULTIPLI**
VERFAHREN ZUR HERSTELLUNG EINER MEHRLAGIGEN SAUGFÄHIGEN PAPIERBAHN
METHOD FOR MAKING A MULTIPLY ABSORBENT PAPER SHEET

(30) Priorité: 27.09.2000 EP 00402673
(43) Date de publication de la demande: 30.07.2003
(73) Titulaire: Georgia-Pacific France, 68320 Kunheim (FR)
(72) Inventeur: BASLER, Michel, F-68500 Issenheim (FR); LAURENT, Pierre, F-68000 Colmar (FR); ROUSSEL, Gilles, F-68320 Durrenentzen (FR); RUPPEL, Rémy, F-68320 Durrenentzen (FR)
(74) Mandataire: Bloch, Gérard
(86) Numéro de dépôt international: PCT/FR2001/003000
(87) Numéro de publication internationale: WO 2002/026481

(56) Documents cités:
- WO-A-00/40800
- WO-A-97/11228
- FR-A- 2 105 116
- US-A- 3 414 459
- DATABASE PAPERCHEM [en ligne] THE INSTITUTE OF PAPER SCIENCE AND TECHNOLOGY, ATLANTA, GA, US; ABREGE NO. AB4411664, ALLGEMEINE PAPIER-RUNDSCHAU: "TISSUE REWINDER-PLY COMBINER" retrieved from DIALOG XP002156770 & ALLG. PAPIER-RUNDSCHAU NO. 40: 1272, 1277-8 (OCT. 5, 1973). [GER.],

## Description

La présente invention se rapporte au domaine des papiers sanitaires ou domestiques et en particulier aux produits constitués de deux ou plusieurs plis d'ouate de cellulose crêpée. De tels produits trouvent une application en tant que mouchoir, serviette de table, papier toilette ou autre. L'invention vise notamment la fabrication d'une feuille de papier à usage comme papier toilette

L'ouate de cellulose, désignée également papier tissue, est un papier de faible grammage, dont on recherche selon les applications envisagées les qualités de douceur, de souplesse, de résistance et d'absorption, seules ou en combinaison. En fonction de sa technique de fabrication, il peut être du type crêpé. Par exemple le crêpage peut être obtenu au moment du séchage de la feuille. Celle ci est appliquée encore humide sur un cylindre chauffé à une température suffisante pour en extraire l'humidité. On décolle la feuille au moyen d'une racle placée entre celle-ci et la surface du cylindre. Cette opération, convenablement menée, entraîne la formation d'ondulations disposées perpendiculairement au sens de défilement de la feuille. On caractérise le crêpage de la feuille par le nombre de crêtes comptées dans le sens marche ramené à une unité de longueur. Ces ondulations confèrent à la feuille une certaine élasticité dont elle serait sinon quasiment entièrement dépourvue. L'ouate de cellulose crêpée possède ainsi une certaine capacité d'allongement.

Cette propriété permet de gaufrer la feuille. L'opération de gaufrage consiste à déformer la feuille dans le sens perpendiculaire à son plan de façon à en augmenter l'épaisseur. On gaufre la feuille en l'entraînant, par exemple, entre un cylindre à revêtement rigide, pourvu de picots faisant saillie en surface, et un cylindre à revêtement en caoutchouc. D'autres combinaisons sont possibles et connues de l'homme du métier. L'ensemble de tels cylindres, assurant cette fonction, sera désigné par la suite groupe de gaufrage. En fonction de l'intensité du gaufrage, on obtient une feuille plus ou moins épaisse, cette épaisseur étant mesurée entre les deux plans délimitant la feuille. Le gaufrage affecte aussi d'autres paramètres physiques de la feuille comme la résistance à la déchirure qui diminue en raison de la rupture de liaisons entre les fibres. Sa capacité d'allongement diminue également en raison de la déformation plastique subie.

Il est bien connu d'associer deux ou plusieurs plis d'ouate de cellulose pour former des feuilles plus épaisses, plus absorbantes ou plus résistantes. On peut les gaufrer au préalable pour améliorer encore l'épaisseur et la capacité d'absorption ou pour donner plus de main. Pour assurer la liaison des plis entre eux, on peut interposer une pellicule d'adhésif entre les portions de surface qui viennent en contact entre elles lorsqu'on superpose un pli à l'autre.

On peut aussi assurer une liaison mécanique par moletage. Cette opération consiste à faire rouler une molette, pourvue d'un relief approprié, à la surface d'une feuille constituée des plis à associer et en appui sur une surface rigide. Cette dernière peut-être lisse ou présenter un relief complémentaire à celui de la molette. On appuie la molette avec une force suffisante pour qu'il se crée une liaison entre les plis dans les zones comprimées. L'ensemble des molettes et de la surface d'appui rigide, généralement un cylindre acier, sera désigné par la suite, groupe de moletage.

La demanderesse a réalisé des produits à deux plis d'ouate de cellulose crêpée dont l'un est gaufré et l'autre non. On a constaté que dans certains cas il se formait des plis transversaux donnant un aspect peu satisfaisant à la feuille.

Le procédé de fabrication peut se décomposer en plusieurs étapes dont chacune est en soi connue. On déroule une première bande d'ouate de cellulose crêpée depuis un dévidoir. On la guide à travers un groupe de gaufrage dont le motif est composé par exemple de protubérances en forme de pointes. On déroule une seconde bande depuis un dévidoir. Il peut s'agir d'un second dévidoir indépendant du premier mais on peut également avoir deux bandes enroulées sur une même bobine. Dans ce cas on dispose un moyen pour séparer les deux bandes.

On dirige la seconde bande vers la première, en aval du groupe de gaufrage. On les superpose en les plaçant de telle sorte que les sommets des protubérances de la première se retrouvent à l'intérieur de l'ensemble. Ensuite ou en même temps, on applique un moyen de liaison rendant les deux bandes solidaires.

Le moyen de liaison peut consister en un groupe de moletage lorsque les plis sont liés selon cette technique ou bien en un cylindre marieur lorsque les plis sont liés par le sommet des protubérances du premier pli, généralement par le moyen d'une pellicule d'adhésif.

On a observé que la formation non désirée des plis transversaux ou de cloques sur l'un des plis avait un lien avec l'existence de zones relativement larges où les plis sont libres l'un par rapport à l'autre. C'est le cas notamment lorsque les plis sont liés par moletage le long de lignes longitudinales disposées près des bords de la feuille après découpe au format d'utilisation. On observe aussi ce phénomène lorsque les plis sont collés partiellement. Le collage est dit partiel lorsque par exemple le nombre des points effectifs de liaison est inférieur au nombre de zones de contact entre les plis. On obtient ce résultat notamment en gaufrant le premier pli avec des protubérances présentant des hauteurs différentes et en n'appliquant une pellicule adhésive que sur les sommets les plus élevés. Plus généralement on observe ce phénomène lorsque les zones liées sont espacées les unes des autres.

Un moyen pour éliminer cet inconvénient est de réduire les espaces libres, non liés, en augmentant la densité des zones liées, c'est à dire leur nombre par unité de surface. Cependant on augmente corrélativement la rigidité de la feuille. On va alors à l'encontre de la recherche de souplesse appréciée des consommateurs.

L'invention a pour objet un procédé permettant de réaliser un tel produit exempt de plis ou d'ondulations transversales.

Le procédé de fabrication, conforme à l'invention, est caractérisé en ce qu'en amont du dit moyen de liaison, on applique un moyen régulateur de tension dans le sens marche sur la deuxième bande non gaufrée et qui accélère ladite bande de façon que celles-ci présentent une même déformation élastique dans le sens marche lorsqu'on applique le moyen de liaison.

La déformation élastique est une déformation qui disparaît lorsqu'on relâche les contraintes. On considère que les plis ont la même déformation élastique quand les déformations élastiques des deux plis sont suffisamment proches pour ne pas engendrer de cloques après la formation du "log" (rouleau au diamètre du produit final avant tronçonnage).

En particulier on applique le moyen régulateur de tension sur le second pli non gaufré. La présente invention résulte de l'observation des caractéristiques physiques du produit avant et après transformation. En effet, le gaufrage induit une déformation telle du produit qu'à la sortie du gaufreur, ses caractéristiques d'élasticité et d'allongement sont modifiées. Dans le processus d'association des deux plis de l'art antérieur dont l'un est gaufré l'autre pas, le pli non gaufré a conservé sensiblement son élasticité et sa capacité d'allongement au moment où l'on applique le moyen de liaison. En effet jusqu'à cette étape, il n'a subi qu'une contrainte de tension modérée et une déformation dans son domaine élastique. Ce n'est pas le cas du premier pli qui a subi une déformation plastique par le gaufrage. Après que le rouleau de papier toilette a été formé, et que les contraintes appliquées à la feuille ont disparu, le pli non gaufré a ainsi tendance à revenir à sa longueur initiale alors que le pli gaufré ne se rétracte pas autant.

On connaît le document WO97/11228 qui décrit la fabrication d'un papier à trois plis dont l'un, le pli central, n'est pas gaufré et l'ensemble est lié par moletage. On précise dans le texte que des rouleaux de détour sont placés sur le chemin des bandes de papier dont certains sont à balancier, pour compenser les tensions différentielles engendrées par le non gaufrage de l'un et le gaufrage des autres. Cette solution vise simplement à assurer que les tensions sur les bandes de papier avant le moletage sont équilibrées. On évite ainsi l'apparition de plis au moment de la liaison des bandes entre elles. Cette solution dans laquelle on agit sur les bandes de papier par freinage a cependant un effet limité. Par ailleurs freiner et donc tendre une bande de papier déjà sous tension permet une marge de réglage assez faible. Même si la différence de tension est annulée, cela ne signifie pas que les bandes ont la même déformation élastique. Cette solution n'empêche pas la formation de plis ou de cloques après que l'on a coupé les bandes de papier lorsque de larges zones ne sont pas liées entre elles et que les bandes ont des propriétés élastiques après gaufrage sensiblement différentes.

Conformément à une caractéristique préférée le moyen régulateur de tension est appliqué sur le second pli, non gaufré.

Conformément à une caractéristique particulière, le moyen régulateur consiste en une paire de rouleaux entre lesquels on fait passer une des bandes d'ouate de cellulose, les rouleaux étant entraînés de façon à modifier la tension de celle-ci dans le sens longitudinal.

Conformément à une autre caractéristique, les bandes d'ouate de cellulose ayant un grammage compris entre 15 et 40 g/m² et entre 40 et 80 lignes de crêpage par cm, la seconde bande est accélérée, immédiatement en amont du moyen de liaison, par le moyen régulateur de tension à une vitesse supérieure de 0,5 à 3 % de celle des deux bandes à leur passage à travers le moyen de liaison, et de préférence de 1,5 à 2,5%.

L'invention permet de fabriquer un produit en ouate de cellulose d'un grammage d'environ 20 à environ 80 g/m² comprenant au moins deux plis et formant une structure stratifiée, dont un pli gaufré en ouate de cellulose crêpée de 10 à 40 g/m² comportant des motifs en relief consistant au moins en partie en des protubérances discrètes orientées vers l'intérieur de la structure et un pli non gaufré obtenu selon le procédé de la présente invention. Ce produit est caractérisé en ce que le pli gaufré présente sur au moins une portion de surface au moins 30 protubérances par cm² dont la surface au sommet est inférieure à 1 mm² de préférence inférieure à 0,7 mm², les deux plis étant de grammages différents et/ou de compositions fibreuses différentes.

Conformément à une autre caractéristique, les grammages des deux plis différent d'au moins 5 %, de préférence de 5 à 30%. Avantageusement, le grammage du pli gaufré est compris entre 15 et 20 g/m² et celui du pli non gaufré entre 21 et 25 g/m² ou bien le grammage du pli gaufré est compris entre 21 et 25 g/m² et celui du pli non gaufré entre 15 et 20 g/m².

Conformément à une autre caractéristique les compositions fibreuses diffèrent de telle sorte que l'un des plis présente une résistance à la déchirure supérieure à l'autre. Notamment le pli gaufré présente sur au moins 30 % et de préférence au moins 50% de la surface totale au moins 30 protubérances par cm² et plus particulièrement le nombre de protubérances est au moins de 50 par cm², et leur surface au sommet est inférieure ou égale à 0,4 mm².

Conformément à une autre caractéristique il présente un second motif de protubérances de gaufrage entre lesdites portions de surface et les plis sont associés par liaison des surfaces distales d'au moins une partie des protubérances du pli gaufré audit pli non gaufré.

L'invention sera mieux comprise à la lecture de la description qui suit de deux modes de réalisation en relation avec les dessins annexes sur lesquels

La figure 1 représente une installation permettant de gaufrer un pli et de l'associer à un autre pli par encollage.

La figure 2 représente une installation permettant de gaufrer un pli et de l'associer à un autre pli par moletage.

Selon le premier mode de réalisation de l'invention, l'installation comporte de façon connue un groupe de gaufrage (10,12), un applicateur de colle (14) et un cylindre marieur (16). Le groupe de gaufrage comprend un cylindre acier (10) gravé selon un motif approprié de protubérances. Les protubérances, non représentées, sont par exemple de forme tronconique ou pyramidale, à base circulaire, ovale ou polygonale. D'autres formes connues de l'homme de l'art conviennent également. Le cylindre (12), d'axe parallèle au premier, est en caoutchouc ou en matériau équivalent. Un pli de papier tissue (20) est déroulé depuis une bobine formant dévidoir, non représentée, et guidé jusqu'au cylindre (12). Celui-ci l'entraîne et l'applique à la surface du cylindre gravé (10) dont il épouse le relief. En aval le dispositif applicateur de colle (14) dépose par son cylindre applicateur une pellicule d'adhésif sur les sommets des surfaces saillantes de la gravure du cylindre (10).

Parallèlement un deuxième pli (40) est entraîné et guidé vers le premier (20) et est appliqué contre les sommets encollés par un moyen de liaison qui est un cylindre marieur (16). En aval du cylindre marieur, la feuille composée des deux plis (20, 40) est entraînée vers un poste d'enroulement et de découpe en rouleaux de papier toilette par exemple. Les cylindres sont entraînés en synchronisme par des moteurs non représentés comme cela est connu de l'homme du métier.

Comme on l'a expliqué plus haut, en vue de certaines applications, comme le papier toilette par exemple, on réduit autant que possible la surface des zones liées entre elles, pour obtenir un produit aussi souple que possible. Le motif des protubérances est donc choisi en conséquence. Par exemple le motif peut comprendre des premières protubérances, hautes et espacées les unes des autres combinées à des micro-protubérances en grand nombre mais de hauteur plus faible. La colle n'est déposée par l'applicateur que sur les sommets des premières. On considère que les premières protubérances sont espacées si on peut placer un disque de 1,5 cm de diamètre entre des protubérances adjacentes. Dans ce cas on a constaté qu'en mettant en oeuvre la technique de l'art antérieur, en aval du cylindre marieur et après découpe, la feuille présentait des ondulations ou des cloques. Pour remédier à ce défaut, conformément à un mode de réalisation de l'invention, on prévoit un moyen régulateur de tension de la feuille (40) immédiatement en amont du moyen de liaison (16). Il est placé à une distance inférieure à trois mètres et de préférence à deux mètres de la zone de pincement du moyen de liaison (16) en fonction de l'installation. On vise à éviter toute perturbation sur la bande de papier. Il ne peut non plus être placé trop prés, une distance d'au moins 50 cm doit être laissée entre la zone où les cylindres sont en contact. Ce moyen régulateur de tension (18) est composé de deux cylindres parallèles (182 et 184), de petit diamètre par rapport à celui des cylindres (10, 12, 16). Par exemple, ils ont un diamètre compris entre 10 et 20 cm. La feuille (40) est guidée successivement autour des deux cylindres disposés de façon à imposer à celle-ci un changement de direction à chaque fois. Ces deux cylindres ont un revêtement antiglissant et sont entraînés par moteur, non représenté, à une vitesse déterminée. Conformément à l'invention le régulateur de tension (18) accélère légèrement le pli (40), par rapport à la vitesse des deux plis au niveau du moyen de liaison, de manière à le détendre avant qu'il ne soit appliqué contre le cylindre gravé (10) par le cylindre marieur (16). Cette différence de vitesse dépend de l'intensité de gaufrage du pli extérieur. Plus la déformation plastique subie par le pli gaufré sera importante plus il sera nécessaire d'augmenter la vitesse du moyen régulateur de tension pour éviter l'apparition de cloques inesthétiques. Pour des niveaux de gaufrage correspondant au produit "Lotus Confort", marque déposée, actuellement sur le marché français, une augmentation de 1 à 2 % de la vitesse par rapport à la vitesse de défilement de la feuille convient pour obtenir un produit fini exempt de toute ondulation.

On a réalisé des tests afin de mesurer l'impact du gaufrage sur la perte en allongement de plis de papier tissue. Sur deux qualités de papier tissue (A et B), on a procédé au gaufrage selon un motif tel qu'utilisé pour réaliser un papier toilette commercialisé sous la marque Lotus Confort. Ce motif comprend un motif de fond constitué de 80 protubérances par cm² et un motif principal dont les protubérances sont en forme de fleur stylisée.

On a gaufré le papier sur la même machine de gaufrage pour trois valeurs de pression, correspondant respectivement aux empreintes de 26, 28 et 30 mm de large. On relève que le gaufrage induit une réduction de la capacité d'allongement d'environ 40 % à plus de 50 %.

| Identification | Grammage G/m² | Epaisseur Mm | Résistance à la déchirure sens marche MD N/m/1pli | Résistance à la déchirure sens travers CD N/m/1pli | Allongement sens marche % | Empreinte Mm |
|---|---|---|---|---|---|---|
| Tissue A | 20,4 | 0,16 | 109 | 47 | 21 | |
| Gaufré | 18,2 | 0,24 | 86 | 30 | 12 | 26 |
| Em=26. | -10.8% | 50% | -21% | -36% | -43% | |
| Gaufré | 19 | 0,24 | 87 | 28 | 13 | 28 |
| Em=28 | -6,9% | 50% | -20% | -40% | -38% | |
| Gaufré | 18.5 | 0,26 | 71 | 23 | 10 | 30 |
| Em=30 | -9,3% | 63% | -35% | -51% | -52% | |
| Tissue B | 22,5 | 0,18 | 144 | 50 | 28 | |
| Gaufré | 21,2 | 0,27 | 131 | 37 | 17 | 26 |
| Em=26 | -5,8% | 50% | -9% | -26% | -39% | |
| Gaufré | 20,7 | 0,27 | 115 | 31 | 15 | 28 |
| Em=28 | -8% | 50% | -20% | -38% | -46% | |
| Gaufré | 20,9 | 0,29 | 110 | 29 | 14 | 30 |
| Em=30 | -7,1% | 61% | -24% | -42% | -50%. | |

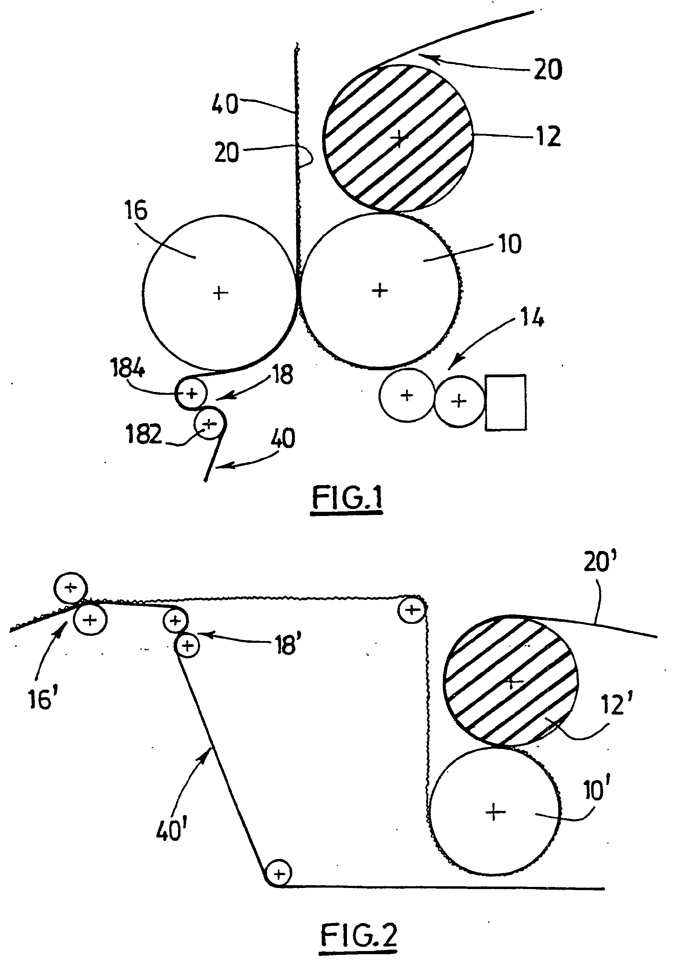

La figure 2 représente un autre mode de réalisation où les plis sont liés par moletage. Un pli de papier tissue crêpé (20') est entraîné depuis un dévidoir jusqu'à une unité de gaufrage (10', 12'). Après gaufrage la feuille (20') est guidée vers un moyen de liaison (16') qui est dans ce cas un ensemble de moletage connu en soi. Un deuxième pli (40') est entraîné depuis un dévidoir directement jusqu'à l'unité de moletage en aval du gaufreur (10', 12'). Conformément à l'invention, un moyen régulateur de tension du pli (40') est disposé en amont du moyen de liaison (16'). Comme dans le cas précédent ce régulateur (18') est composé de deux cylindres qui accélèrent le pli (40') avant qu'il ne soit appliqué par le moyen de liaison contre le pli gaufré (20').

## Revendications

1. Procédé de fabrication d'une feuille de papier comprenant au moins deux plis d'ouate de cellulose crêpée consistant à dérouler un première bande d'ouate de cellulose crêpée depuis un dévidoir, à la gaufrer sur un groupe de gaufrage pour former des protubérances à sa surface, à dérouler une deuxième bande d'ouate de cellulose crêpe depuis un dévidoir, à la guider en aval du groupe de gaufrage, à superposer les deux bandes, protubérances vers l'intérieur, et à appliquer un moyen de liaison de façon à rendre les deux bandes solidaires l'une de l'autre, **caractérisé en ce qu'**immédiatement en amont du dit moyen de liaison, on applique un moyen régulateur de tension dans le sens marche sur ladite deuxième bande et qui accélère ladite bande, de sorte que les deux bandes présentent une même déformation élastique sens marche lorsqu'on applique le moyen de liaison.

2. Procédé selon la revendication précédente, **caractérisé par le fait que** le dit moyen régulateur est à une distance inférieure à trois mètres, de préférence à deux mètres du moyen de liaison.

3. Procédé selon l'une des revendications précédentes, **caractérisé en ce que** le moyen régulateur consiste en une paire de rouleaux entre lesquels on fait passer la bande d'ouate de cellulose, les rouleaux étant entraînés de façon à modifier la tension de celle-ci dans le sens longitudinal.

4. Procédé selon l'une des revendications précédentes, **caractérisé en ce que** le moyen de liaison consiste en un groupe de moletage.

5. Procédé selon la revendication 1, 2 ou 3, **caractérisé en ce que** le moyen de liaison consiste en un cylindre marieur coopérant avec le cylindre acier du dit groupe de gaufrage pour assurer la liaison entre les bandes au niveau des sommets des protubérances formées.

6. Procédé selon la revendication précédente, **caractérisé en ce qu'**on applique un adhésif sur les sommets des dites protubérances avant d'appliquer le moyen de liaison.

7. Procédé selon l'une des revendications 4 et 5, **caractérisé en ce que** les protubérances du motif de gaufrage de la première bande sont espacées les unes des autres, les zones non associées occupant une surface supérieure à 2cm².

8. Procédé selon la revendication précédente, les bandes d'ouate de cellulose ayant un grammage compris entre 10 et 40 g/cm² et entre 40 et 80 lignes de crêpage par cm², **caractérisé en ce que** la deuxième bande est accélérée, immédiatement en amont du moyen de liaison, par le moyen régulateur de tension à une vitesse supérieure de 0,5 à 3 % de celle des deux bandes à leur passage à travers le moyen de liaison, et de préférence de 1,5 à 2,5 %.

9. Procédé selon l'une des revendications 1 à 8 dont la première bande en ouate de cellulose crêpée de 10 à 40g/m² est gaufrée de manière à présenter sur au moins une portion de surface au moins 30 protubérances par cm² dont la surface au sommet est inférieure à 1 mm² de préférence inférieure à 0.7mm², les deux bandes étant de grammages différents et/ou de compositions fibreuses différentes.

10. Procédé selon la revendication précédente, dont les grammages des deux bandes diffèrent d'au moins 5 %, de préférence de 5 à 30%.

11. Procédé selon la revendication 10, dont le grammage de la première: bande est compris entre 15 et 20g/m² et celui de la deuxième bande non gaufrée entre 21 et 25 g/m².

12. Procédé selon la revendication 10, dont le grammage de la première bande est compris entre 21 et 25 g/m² et celui de la deuxième bande entre 15 et 20g/m².

13. Procédé selon l'une des revendications 9 à 12 dont les compositions fibreuses différent de telle sorte que l'une des bandes présente une résistance à la déchirure supérieure à l'autre.

14. Procédé selon la revendication précédente, dont la première bande est gaufrée de manière à présenter sur au moins 30 % et de préférence au moins 50% de la surface totale au moins 30 protubérances par cm².

15. Procédé selon l'une des revendications 9 à 14, dont le nombre de protubérances est au moins de 50 par cm², et leur surface au sommet est inférieure ou égale à 0,4 mm².

16. Procédé selon l'une des revendications 9 à 15, dont la première bande est gaufrée de manière à présenter un second motif de protubérances de gaufrage entre lesdites portions de surface.

17. Procédé selon la revendication précédente, dont les bandes sont associées par liaison des surfaces distales d'au moins une partie des protubérances de la bande gaufrée à ladite bande non gaufrée.

18. Procédé selon la revendication 17, que la liaison est obtenue par collage des protubérances du second motif au moins en partie.

## Patentansprüche

1. Verfahren zur Herstellung eines mindestens zwei Lagen gekreppter Zellstoffwatte umfassenden Papierbogens, das darin besteht, eine erste Bahn gekreppter Zellstoffwatte von einer Abgabevorrichtung abzurollen, sie auf einer Prägeeinheit zu prägen, um Erhebungen auf ihrer Oberfläche herzustellen, eine zweite Bahn gekreppter Zellstoffwatte von einer Abgabevorrichtung abzurollen, sie stromabwärts der Prägeeinheit zu leiten, die beiden Bahnen mit den Erhebungen nach innen übereinander zu legen, und eine Verbindungseinrichtung anzuwenden, um die beiden Bahnen fest miteinander zu verbinden,
**dadurch gekennzeichnet, dass**
unmittelbar stromaufwärts der Verbindungseinrichtung eine Spannungsregeleinrichtung in der Laufrichtung auf die zweite Bahn angewandt wird, welche die Bahn so beschleunigt, dass die beiden Bahnen in der Laufrichtung ein und dieselbe elastische Verformung aufweisen, wenn die Verbindungseinrichtung angewandt wird.

2. Verfahren nach dem vorhergehenden Anspruch,
**dadurch gekennzeichnet, dass**
die Regeleinrichtung sich in einem Abstand von weniger als drei Metern, vorzugsweise zwei Metern, von der Verbindungseinrichtung befindet.

3. Verfahren nach einem der vorhergehenden Ansprüche,
**dadurch gekennzeichnet, dass**
die Regeleinrichtung aus einem Paar Walzen besteht, zwischen denen man die Zellstoffwattebahn hindurchlaufen lässt, wobei die Walzen so angetrieben werden, dass die Spannung der Zellstoffwattebahn in der Längsrichtung modifiziert wird.

4. Verfahren nach einem der vorhergehenden Ansprüche,
**dadurch gekennzeichnet, dass**
die Verbindungseinrichtung aus einer Prägewalzeneinheit besteht.

5. Verfahren nach Anspruch 1, 2 oder 3,
**dadurch gekennzeichnet, dass**
die Verbindungseinrichtung aus einem verbindungsherstellenden Zylinder besteht, der mit dem Stahlzylinder der Prägeeinheit zusammenwirkt, um die Verbindung der Bahnen im Bereich der Spitzen der hergestellten Erhebungen sicherzustellen.

6. Verfahren nach dem vorhergehenden Anspruch,
**dadurch gekennzeichnet, dass**
vor dem Anwenden der Verbindungseinrichtung ein Klebstoff auf die Spitzen der Erhebungen aufgetragen wird.

7. Verfahren nach einem der Ansprüche 4 und 5,
**dadurch gekennzeichnet, dass**
die Erhebungen des Prägemusters der ersten Bahn voneinander beabstandet sind,
wobei die nicht miteinander verbundenen Bereiche eine Fläche einnehmen, die größer als 2 cm² ist.

8. Verfahren nach dem vorhergehenden Anspruch,
wobei die Zellstoffwattebahnen ein Flächengewicht zwischen 10 und 40 g/m² und 40 bis 80 Krepplinien pro cm² haben, **dadurch gekennzeichnet, dass** die zweite Bahn unmittelbar stromaufwärts der Verbindungseinrichtung durch die Spannungsregeleinrichtung auf eine Geschwindigkeit über 0,5 bis 3% derjenigen der beiden Bahnen bei ihrem Durchlaufen der Verbindungseinrichtungen und vorzugsweise auf 1,5 bis 2,5% beschleunigt wird.

9. Verfahren nach einem der Ansprüche 1 bis 8, wobei die erste gekreppte Zellstoffwattebahn mit einem Flächengewicht zwischen 10 und 40 g/m² so geprägt wird, dass sie auf zumindest einem Abschnitt der Oberfläche mindestens 30 Erhebungen pro cm² aufweist, deren Fläche an der Spitze unter 1 mm², vorzugsweise 0,7 mm², beträgt, wobei die beiden Bahnen unterschiedliche Flächengewichte und/oder unterschiedliche Faserzusammensetzungen haben.

10. Verfahren nach dem vorhergehenden Anspruch, wobei sich die Flächengewichte der beiden Bahnen um mindestens 5%, vorzugsweise um 5 bis 30%, unterscheiden.

11. Verfahren nach Anspruch 10, wobei das Flächengewicht der ersten Bahn zwischen 15 und 20 g/m² und dasjenige der zweiten, nicht geprägten Bahn zwischen 21 und 25 g/m² beträgt.

12. Verfahren nach Anspruch 10, wobei das Flächengewicht der ersten Bahn zwischen 21 und 25 g/m² und dasjenige der zweiten Bahn zwischen 15 und 20 g/m² beträgt.

13. Verfahren nach einem der Ansprüche 9 bis 12, wobei sich die Faserzusammensetzungen so unterscheiden, dass die eine der Bahnen eine höhere Reißfestigkeit aufweist als die andere.

14. Verfahren nach dem vorhergehenden Anspruch,
**dadurch gekennzeichnet, dass**
die erste Bahn so geprägt wird, dass sie auf mindestens 30% und vorzugsweise mindestens 50% der Gesamtfläche mindestens 30 Erhebungen pro cm² aufweist.

15. Verfahren nach einem der Ansprüche 9 bis 14, wobei die Anzahl der Erhebungen mindestens 50 pro cm² beträgt und ihre Fläche an der Spitze kleiner oder gleich 0,4 mm² ist.

16. Verfahren nach einem der Ansprüche 9 bis 15, wobei die erste Bahn so geprägt wird, dass sie ein zweites Prägemuster von Erhebungen zwischen den Oberflächenabschnitten aufweist.

17. Verfahren nach dem vorhergehenden Anspruch, wobei die Bahnen durch Verbinden der distalen Flächen zumindest eines Teils der Erhebungen der geprägten Bahn mit der nicht geprägten Bahn miteinander verbunden werden.

18. Verfahren nach Anspruch 17, wobei die Verbindung durch zumindest teilweises Verkleben der Erhebungen des zweiten Musters erhalten wird.

## Claims

1. A method for the manufacture of a paper sheet comprising at least two plies of creped cellulose wadding, involving unwinding a first ply in the form of a strip from an unwinder, embossing it on an embossing group in order to form protuberances on its surface, unwinding a second ply in the form of a strip from an unwinder, guiding it downstream of the embossing group, superposing the two strips, protuberances toward the inside, and applying a connecting means so as to make the two plies integral with one another, **characterized in that**, immediately upstream of said connecting means, a tension-regulating means is applied to said second ply in the running direction and accelerate said ply, so that the two strips have the same elastic deformation in the running direction when the connecting means is applied.

2. The method as claimed in the preceding claim, **characterized in that** said regulating means is at a distance lower than three meters and preferably at two meters from the connecting means.

3. The method as claimed in one of the preceding claims, **characterized in that** the regulating means consists of a pair of rollers, between which one of the strips of cellulose wadding is passed, the rollers being driven so as to modify the tension of said strip in the longitudinal direction.

4. The method as claimed in one of the preceding claims, **characterized in that** the connecting means consist of a knurling group.

5. The method as claimed in claim 1, 2 or 3, **characterized in that** the connecting means consists of a mating cylinder cooperating with the steel cylinder of said embossing group in order to make the connection between the strips at the tops of the protuberances formed.

6. The method as claimed in the preceding claim, **characterized in that** an adhesive is applied to the tops of said protuberances before the connecting means is applied.

7. The method as claimed in one of claims 4 and 5, **characterized in that** the protuberances of the embossing pattern of the first strip are spaced from one another, the uninvolved zones occupying an area greater than 2 cm².

8. The method as claimed in the preceding claim, the strips of cellulose wadding having a gsm count of between 10 and 40 g/cm² and having between 40 and 80 creping lines per cm², **characterized in that** the second strip is accelerated, immediately upstream of the connecting means, by the tension-regulating means to a speed higher by 0.5 to 3 % than that the two strips during their passage through the connecting means, preferably higher by 1.5 to 2.5 %.

9. The method as claimed in one of claims 1 to 8, the first ply of creped cellulose wadding of 10 to 40 g/m² is embossed and presents at least a portion of its surface, at least 30 protuberances per cm², of which the area at the top is lower than 1 mm², preferably lower than 0.7 mm², the two plies having different gsm counts and/or different fibrous compositions.

10. The method as claimed in the preceding claim, **characterized in that** the gsm counts of the two plies differ by at least 5 %, preferably by 5 to 30 %.

11. The method as claimed in claim 10, **characterized in that** the gsm count of the embossed ply is between 15 and 20 g/m² and that of the unembossed ply is between 21 and 25 g/m².

12. The method as claimed in claim 10, **characterized in that** the gsm count of the embossed ply is between 21 and 25 g/cm² and that of the unembossed ply is between 15 and 20 g/m².

13. The method as claimed in one of claims 9 to 12, **characterized in that** the fibrous compositions differ in such a way that one of the plies has a tearing strength higher than the other.

14. The method as claimed in the preceding claim, **characterized in that** the embossed ply has at least 30 protuberances per cm² over at least 30 % and preferably at least 50 % of the total area.

15. The method as claimed in one of claims 9 to 14, **characterized in that** the number of protuberances is at least 50 per cm², and their area at the top is lower than or equal to 0.4 mm².

16. The method as claimed in one of claims 9 to 15, **characterized in that** it has a second pattern of embossing protuberances between said surface portions.

17. The method as claimed in the preceding claim, **characterized in that** the plies are combined by means of the connection of the distal surfaces of at least some of the protuberances of the embossed ply to said unembossed ply.

18. The method as claimed in claim 17, **characterized in that** the connection is obtained by the adhesive bonding of the protuberances of the second pattern at least partially.
